# EUROPÄISCHE PATENTSCHRIFT

(11) **EP 3 849 890 B1**
(45) Veröffentlichungstag und Bekanntmachung des Hinweises auf die Patenterteilung: **03.07.2024**
(21) Anmeldenummer: 20764602.7
(22) Anmeldetag: 25.08.2020
(51) Int. Cl.: B62J 9/20, B62K 7/04

(54) **LASTENFAHRRADBEHÄLTER**
LOAD-CARRYING CYCLE CONTAINER
RÉCIPIENT À CYCLE DE TRANSPORT DE CHARGE

(30) Priorität: 02.09.2019 DE 202019104807 U
(43) Veröffentlichungstag der Anmeldung: 21.07.2021
(73) Patentinhaber: RTI Sports GmbH, 56070 Koblenz (DE)
(72) Erfinder: RASCHE, Johannes, 64285 Darmstadt (DE); GRAEVE, Arndt, 56072 Koblenz (DE)
(74) Vertreter: dompatent von Kreisler Selting Werner - Partnerschaft von Patent- und Rechtsanwälten mbB
(86) Internationale Anmeldenummer: PCT/EP2020/073763
(87) Internationale Veröffentlichungsnummer: WO 2021/043639

(56) Entgegenhaltungen:
- WO-A2-2017/013577
- DE-A1-102016 101 870
- DE-U1-202014 003 119
- ANONYMOUS: "Manual Urban Arrow Family", URBAN ARROW MANUAL, VERSION UAF-FM2017EN-0001, 1. März 2017 (2017-03-01), XP055560313,

## Beschreibung

Die Erfindung betrifft einen Lastenfahrradbehälter.

Lastenfahrräder, die zum Transport von Personen, insbesondere Kindern oder Lasten, geeignet sind, weisen einen Lastenfahrradbehälter auf. Derartige Lastenfahrradbehälter sind häufig aus Holz oder Metall ausgebildet. Ferner sind insbesondere zur Gewichtsersparnis auch Lastenfahrradbehälter aus steifem Kunststoffmaterial bekannt. Bekannte Lastenfahrradbehälter weisen den Nachteil auf, dass im Falle eines Unfalls, insbesondere eines Unfalls mit Personen wie Fußgängern, häufig schwere Verletzungen auftreten. Weiterhin haben diese Lastenfahrradbehälter bei Kindertransport den Nachteil, dass auch innerhalb des Lastenaufnahmebehälters bei einem Unfall Personen verletzt werden können. Aus WO 2017/013577 ist ein Lastenfahrrad mit einem Lastenfahrradbehälter bekannt. Der Lastenfahrradbehälter ist im wesentlichen quaderförmig ausgebildet. Das Dokument XP055560313, "Manual Urban Arrow Family", offenbart einen gattungsgemäßen Lastenfahrradbehälter.

Aufgabe der Erfindung ist es, einen Lastenfahrradbehälter zu schaffen, durch den die Schwere von im Falle eines Unfalls auftretenden Verletzungen verringert ist.

Die Lösung der Aufgabe erfolgt erfindungsgemäß durch einen Lastenfahrradbehälter mit den Merkmalen des Anspruchs 1.

Der erfindungsgemäße Lastenfahrradbehälter weist neben einem Bodenelement insbesondere zwei Seitenwände, eine Rückwand und eine Vorderwand auf. Je nach Formgestaltung des Lastenfahrradbehälters gehen diese Bestandteile ineinander über. Insbesondere handelt es sich nicht um Einzelteile, sondern um ggf. zumindest teilweise einstückig hergestellte Teile des Lastenfahrradbehälters. Auch kann der Lastenfahrradbehälter vollständing einstückig hergestellt sein. In besonders bevorzugter Ausführungsform sind zumindest Teile des Lastenfahrradbehälters, d.h. zumindest Teile der Seitenwände, der Rückwand, der Vorderwand und/oder des Bodenelements aus Kunststoff hergestellt. Vorzugsweise sind zumindest einzelne dieser Elemente und besonders bevorzugt sämtliche Elemente des Lastenfahrradbehälters aus Kunststoff hergestellt.

Die Kunststoffteile weisen in einer besonders bevorzugten Ausführungsform Partikelschaum auf und sind insbesondere aus Partikelschaum hergestellt. Insbesondere handelt es sich um thermoplastische Partikelschäume. Geeignet ist beispielsweise EPP (expandierbares Polypropylen). Alternativ können zumindest einzelne Teile des Lastenfahrradbehälters auch als Kunststoff-Spritzgussteile hergestellt sein.

Erfindungsgemäß weist der Lastenfahrradbehälter ferner ein oder mehrere Versteifungselemente auf. Durch Vorsehen eines Versteifungselements ist es insbesondere möglich, einen weicheren Kunststoff, insbesondere einen Partikelschaum, zur Herstellung zumindest einzelner Teile des Lastenfahrradbehälters zu verwenden. Erfindungsgemäß ist das Versteifungselement zumindest teilweise innerhalb einer der Seitenwände und/oder der Rückwand und/oder der Vorderwand angeordnet. Dies hat den Vorteil, dass ein beispielsweise aus Metall oder einem harten Kunststoff oder dergleichen hergestelltes Versteifungselement eine Abdeckung aufweist, so dass im Falle eines Unfalls der Aufprall gedämpft wird. Insofern ist es besonders bevorzugt, dass das Versteifungselement an Gefahrenstellen bei einem Aufprall innerhalb der Seitenwand und/oder der Rückwand und/ oder der Vorderwand angeordnet ist. Gefahrenstellen sind insbesondere diejenigen Bereiche des Lastenfahrradbehälters, an denen im Falle eines Unfalls mit hoher Wahrscheinlichkeit Personen aufprallen.

Erfindungsgemäß ist das Versteifungselement in einem Übergangsbereich zwischen der Vorderwand und der Seitenwand innerhalb der Seitenwand und der Vorderwand angeordnet. Gerade diese Bereiche, d.h. die vorderen Randbereiche bzw. Ecken, die selbstverständlich abgerundet sein können, stellen hohe Gefahrenstellen bei einem Aufprall dar.

Bevorzugt ist es, dass das Versteifungselement in Bereichen, in denen es innerhalb der Seitenwand und/oder der Rückwand und/oder der Vorderwand angeordnet ist, zumindest an einer Außenseite von Material, insbesondere entsprechendem Kunststoffmaterial, abgedeckt ist. Erfindungsgemäß ist in dem Übergangsbereich das Versteifungselement zumindest an einer Außenseite vom Material einer der Seitenwände und der Vorderwand abgedeckt.

Die Außenseite ist hierbei diejenige nach außen weisende Seite des Lastenfahrradbehälters. An dieser tritt üblicherweise der Aufprall auf. Nach innen, d.h. in Richtung des Innenbereichs des Lastenfahrradbehälters, kann das Versteifungselement sichtbar sein.

Es ist auch möglich, dass das Versteifungselement auch in Bereichen von Gefahrenstellen sichtbar ist, jedoch innerhalb einer Nut oder Ausnehmung angeordnet ist. Hierbei ist die Nut oder Ausnehmung mindestens so tief, dass das Versteifungselement vollständig innerhalb der Nut oder Ausnehmung angeordnet ist. Vorzugsweise ist die Nut oder Ausnehmung tiefer als die entsprechende Abmessung des Versteifungselements, so dass Kunststoffmaterial nach außen gegenüber dem Versteifungselement vorsteht. Auch hierdurch kann ein guter Aufprallschutz realisiert werden.

Besonders bevorzugt ist es, dass insbesondere an Gefahrenstellen, d.h. insbesondere im Übergangsbereich zwischen der Vorderwand und der Seitenwand, das Versteifungselement vollständig von Kunststoffmaterial umgeben ist. Vorzugsweise ist die Vorderwand insbesondere im Übergangsbereich zu den Seitenwänden derart ausgebildet, dass sie eine konvexe Außenseite aufweist. Durch eine derart abgerundete Außenseite des Lastenfahrradbehälters ist die Gefahr von Verletzungen bei einem Aufprall weiter verringert. Nicht nur, dass hierdurch scharfe Kanten vermieden sind, sondern es erfolgt auch eine Art Ableiten beispielsweise einer in diesem Bereich aufprallenden Person. Der auftretende Impuls wird somit nicht vollständig auf die Person übertragen. Besonders bevorzugt ist es, dass der Übergangsbereich zwischen der Vorderwand und den beiden Seitenwänden einen Krümmungsradius von mindestens 5 cm, insbesondere mindestens 10 cm aufweist.

Erfindungsgemäß ist die Vorderwand im Übergangsbereich einen Winkel zur Längsachse bzw. zur Fahrtrichtung aufweist. Der Winkel ist insbesondere größer als 90° und bevorzugt größer als 110° und insbesondere bevorzugt größer als 130°. Die Längsrichtung des Lastenfahrradbehälters entspricht in montiertem Zustand der Fahrtrichtung. Die Vorderwand ist somit im Übergangsbereich zu den Seitenwänden nach hinten abgeschrägt bzw. der Lastenfahrradbehälter ist in Fahrtrichtung pfeilförmig ausgebildet. Auch dies bewirkt im Aufprall ein Ableiten, so dass die auftretenden Impulse nicht vollständig in eine Person oder dergleichen eingeleitet werden. Selbstverständlich ist es möglich, die konvexe Ausgestaltung mit einem derart geneigten bzw. abgewinkelten Übergangsbereich zu kombinieren.

Besonders bevorzugt ist es, dass das Versteifungselement als insbesondere umlaufender Verbindungsbügel oder Versteifungsbügel ausgebildet ist. Das Versteifungselement bildet somit eine Art Rahmenelement für den Lastenfahrradbehälter. Inbesondere ist ein derartiges Versteifungselement in einem oberen Bereich nahe einer Oberkante des Lastenfahrradbehälters angeordnet. Ggf. kann ein weiteres, insbesondere bügel- oder rahmenförmiges Versteifungselement auch im unteren Bereich, d.h. nahe des Bodenelements oder auf Höhe des Bodenelements angeordnet sein. Bei einer Anordnung eines derartigen Versteifungselements im unteren Bereich kann dieses selbstverständlich auch zumindest teilweise innerhalb des Bodenelements bzw. im Übergangsbereich zwischen dem Bodenelement und den Seitenwänden und/oder der Vorderwand und/oder der Rückwand angeordnet sein.

Vorzugsweise ist das insbesondere im oberen und/oder unteren Bereich des Lastenfahrradbehälters angeordnete Versteifungselement rohrförmig ausgebildet. Das Versteifungselement kann Metall aufweisen und ist insbesondere aus Metall hergestellt.

Ggf. kann der Lastenfahrradbehälter mehrteilig ausgebildet sein. Hierbei ist es besonders bevorzugt, dass das Versteifungselement zusätzlich als Verbindungselement dient. Bei dem nachfolgend beschriebenen mehrteiligen, insbesondere zweiteiligen Lastenfahrradbehälter entspricht insbesondere das Verbindungselement dem vorstehend beschriebenen Versteifungselement und ist daher in besonders bevorzugter Ausführungsform, wie vorstehend beschrieben, teilweise abgedeckt bzw. innerhalb der Seitenwände und/oder der Vorderwand und/oder der Rückwand angeordnet.

Besonders bevorzugt ist es, dass der Lastenfahrradbehälter im Wesentlichen aus nur zwei Kunststoffteilen, d.h. insbesondere zwei Hälften besteht. Zumindest eine der beiden Hälften umfasst neben einer Seitenwand zumindest Teile des Bodenelements, der Rückwand und der Vorderwand, wobei das zweite Kunststoffteil eine Seitenwand umfasst oder ebenfalls eine Seitenwand und jeweils zumindest einen Teil des Bodenelements und/oder der Rückwand und/ oder der Vorderwand umfasst. Hierbei ist es besonders bevorzugt, dass beide Kunststoffteile zusätzlich zu einer Seitenwand jeweils einen Teil des Bodenelements und einen Teil der Rückwand und einen Teil der Vorderwand mitumfassen. Insbesondere ist es bevorzugt, dass die beiden als Hälften ausgebildeten Kunststoffteile jeweils die Hälfte des Bodenelements, der Rückwand und der Vorderwand mit umfassen. Die Trennebene zwischen den beiden als Hälften ausgebildeten Kunststoffteilen verläuft somit in montiertem Zustand als vertikale Mittelebene.

Insbesondere ist es bevorzugt, dass die beiden Kunststoffteile nicht nur als Hälften ausgebildet sind, sondern spiegelbildlich bzw. spiegelsymmetrisch zu dieser vertikalen Trennebene ausgebildet sind, wobei die vertikale Trennebene hierbei die Ebene zwischen den beiden Hälften darstellt und keine Formtrennebene einer zweiteiligen Herstellungsform ausbildet. Derartige Formtrennebenen sind zusätzlich vorgesehen, da die einzelnen Kunststoffteile ggf. entformt werden müssen.

Die vorstehend beschriebene bevorzugte Ausgestaltung der einzelnen Teile, insbesondere der Hälften der Kunststoff-Fahrradbox aus Kunststoffteilen, weist insbesondere den Vorteil auf, dass die einzelnen Teile leicht entformbar sind. Die erforderliche Form ist erheblich kleiner gegenüber einer Form, mit der der gesamte Lastenfahrradbehälter aus einem Kunststoffteil hergestellt würde.

Ferner weist die erfindungsgemäße Ausgestaltung des Lastenfahrradbehälters aus mehreren Teilen, insbesondere zwei Hälften mit vertikaler Trennebene, den Vorteil auf, dass in den einzelnen Teilen Ausnehmungen, Vertiefungen u.dgl. auf einfache Weise vorgesehen werden können, ohne dass die Form zur Herstellung des Kunststoffteils aufwändige Schieber, verlorene Kerne o.dgl. zur Erzeugung von Hinterschnitten aufweisen muss.

Besonders bevorzugt ist es, dass eine Entformungsrichtung der Kunststoffteile, insbesondere der beiden Hälften, senkrecht zur jeweiligen Seitenwand und/oder parallel zur Vorderwand bzw. Rückwand bzw. dem Bodenelement verläuft. Hierdurch ist es möglich, das Kunststoffteil auf einfache Weise zu entformen, da insbesondere keine Hinterschnitte vorgesehen sind.

Vorzugsweise sind an Innenseiten der Seitenwände und/oder an Außenseiten der Seitenwände Versteifungsrippen vorgesehen. Bei der bevorzugten Entformungsrichtung und auf Grund des Ausgestaltens des Lastenfahrradbehälters aus insbesondere zwei vertikal geteilten Hälften können derartige Versteigungsrippen o.dgl. vorgesehen werden, ohne dass hierbei Hinterschnitte auftreten. Durch das Vorsehen derartiger Versteifungsrippen kann die Steifigkeit verbessert werden bzw. hierdurch Material und Gewicht eingespart werden. Die Versteifungsrippen können hierbei auch derart ausgebildet sein, dass hierdurch beispielsweise Armauflagen, Halteelemente für Anbauteile, wie Trinkflaschen, Aufbewahrungsfächer u.dgl. ausgebildet sind.

Zusätzlich zu den Versteifungsrippen können in Entformungsrichtung offene Ausnehmungen an der Innenseite und/oder der Außenseite der Seitenwände, aber auch an der Vorderwand oder der Rückwand, auf einfache Weise ausgebildet sein. Auch im Bodenelement können derartige in Entformungsrichtung offene Ausnehmungen vorgesehen sein. Diese können auch an einer Innenseite des Bodenelements offen ausgebildet sein, so dass das Bodenelement Rillen oder Rippen aufweist. Diese dienen einerseits zur Versteifung und können andererseits dazu dienen, dass das Bodenelement an der Innenseite nicht glatt ist, so dass transportierte Güter nicht verrutschen.

Die Verbindung der Kunststoffteile, insbesondere der beiden Hälften des Lastenfahrradbehälters, erfolgt in besonders bevorzugter Ausführungsform über Verbindungselemente. Die Verbindungselemente sind vorzugsweise zumindest teilweise aus Metall ausgebildet. Vorzugsweise ist ein insbesondere im oberen Bereich des Lastenfahrradbehälters angeordneter Verbindungsbügel vorgesehen. Hierbei ist es bevorzugt, dass dieser Verbindungsbügel als eine Art Klammer den Lastenfahrradbehälter vollständig umschließt bzw. umgreift. Der Verbindungsbügel kann auch innerhalb des Lastenfahrradbehälters oder in Ausnehmungen oder Vertiefungen des Lastenfahrradbehälters angeordnet sein. Bevorzugt ist es, dass der Verbindungsbügel insbesondere in sich geschlossen ist und somit eine steife Rahmenkonstruktion ausbildet, die einerseits die Teile des Lastenfahrradbehälters zusammenhält und miteinander verbindet und andererseits eine Kraftaufnahme ermöglicht. Besonders bevorzugt ist daher, dass die Verbindung des Lastenfahrradbehälters mit dem Lastenfahrrad über die Verbindungselemente, und nicht über die Kunststoffteile erfolgt. Hierdurch kann eine zuverlässige Verbindung gewährleistet werden.

Vorzugsweise weist der Verbindungsbügel zwei Bügelelemente auf, die beispielsweise über Schrauben, Rastelemente o.dgl. miteinander verbunden sind. Die Verbindungsbügel sind vorzugsweise U-förmig ausgebildet und verlaufen an einer Seitenwand, wobei das Mittelteil des Bügels an einer Seitenwand verläuft und die beiden Ansätze im Bereich der Vorderwand und der Rückwand verlaufen. Die Verbindung der beiden Bügelelemente erfolgt im Bereich der Vorderwand und/oder der Rückwand, insbesondere in der Mitte dieser beiden Wände. Besonders bevorzugt ist es, dass die Verbindung im Bereich der Trennebene erfolgt.

Vorzugsweise sind die Bügel in einem oberen Bereich nahe einer Oberkante der Seitenwände, der Rückwand und der Vorderwand angeordnet. Insbesondere beträgt der Abstand des Bügelelements zu der Oberkante weniger als 10 cm, insbesondere weniger als 5 cm. Des Weiteren ist es bevorzugt, dass der Verbindungsbügel in Ausnehmungen oder Öffnungen angeordnet ist, so dass dieser insbesondere gegenüber einer Außenseite des Lastenfahrradbehälters nicht vorsteht.

Des Weiteren ist es bevorzugt, dass mindestens ein, insbesondere zwei Verbindungsstreben zum Verbinden der einzelnen Kunststoffteile vorgesehen sind. Besonders bevorzugt ist es, dass zwei Verbindungsstreben vorgesehen sind, wobei eine Verbindungsstrebe durch eine Innenseite der Rückwand und die andere Verbindungsstrebe im Bereich einer Innenseite der Vorderwand angeordnet ist. Die beiden Verbindungsstreben können hierbei derart ausgebildet sein, dass diese zwischen den beiden einander gegenüberliegenden Seitenwänden angeordnet sind und in bzw. an den Seitenwänden fixiert sind. Bevorzugt ist es, dass die insbesondere zwei Verbindungsstreben an ihren Enden Ansätze aufweisen. Hierbei kann ein Ansatz als ein insbesondere fest mit der Strebe verbundener Kopf und der andere Ansatz als lösbarer Ansatz, z.B. als Mutter, ausgebildet sein. Insbesondere bei dieser Ausführungsform ist ein Verspannen der Strebe und somit der Kunststoffteile auf einfache Weise möglich. Die Ansätze sind hierbei vorzugsweise in nach außen offenen Vertiefungen der Seitenwände angeordnet. Diese Vertiefungen können mit einem Deckel verschlossen sein.

Insbesondere durch die Kombination eines umlaufenden Verbindungsbügels im oberen Bereich des Lastenfahrradbehälters und zwei Verbindungsstreben im unteren Bereich kann eine gute und stabile Verbindung des Lastenfahrradbehälters realisiert werden. Insbesondere kann auch die Krafteinleitung über die Verbindungselemente erfolgen, wobei es besonders bevorzugt ist, dass der Lastenfahrradbehälter mit dem Lastenfahrrad über die Verbindungselemente verbunden ist.

In Ausnehmungen oder Öffnungen, die in einzelnen Teilen der Lastenaufnahmebehälter vorgesehen sind, können Anbauteile angeordnet oder auf einfache Weise mit dem Lastenaufnahmebehälter verbunden werden. Beispielsweise kann in eine nach außen offene, insbesondere schlitzförmige Öffnung ein Trittelement eingesteckt werden. Hierdurch kann, insbesondere für Kinder, der Einstieg in den Lastenfahrradbehälter erleichtert werden.

Ferner betrifft die Erfindung einen Lastenfahrrad-Rahmen mit einem Hinterbau zur Aufnahme eines Hinterrads, einem Gabelelement zur Aufnahme eines Vorderrads und einem Tragelement zur Aufnahme des Lastenaufnahmebehälters zwischen einem Lenkerrohr und dem Gabelelement. Der Lastenaufnahmebehälter ist hierbei wie vorstehend beschrieben insbesondere in bevorzugter Ausführungsform ausgebildet.

Das Tragelement des Lastenfahrrad-Rahmens weist insbesondere zwei im Wesentlichen horizontal verlaufende Rahmenelemente auf, wobei ggf. auch nur ein zentrales horizontales Rahmenelement vorgesehen sein kann. In einer bevorzugten Weiterbildung der Erfindung sind die Abmessungen des Lastenfahrradbehälters derart, dass der Lastenfahrradbehälter in montiertem Zustand seitlich über das mindestens eine Rahmenelement vorsteht. Der Lastenfahrradbehälter ist somit bezogen auf die Fahrtrichtung breiter als das mindestens eine Rahmenelement. Hierdurch ist im Falle eines Unfalls sichergestellt, dass keine Kollision mit dem mindestens einen Rahmenelement erfolgt, so dass die Gefahr von Verletzungen weiter reduziert ist.

Des Weiteren ist es bevorzugt, dass das Tragelement des Lastenfahrrad-Rahmens insbesondere zwei in Fahrtrichtung steigende Rahmenelemente aufweist, die mit dem Gabelelement verbunden sind. Ggf. kann auch nur ein steigendes Rahmenelement vorgesehen sein. Besonders bevorzugt ist es, dass dieses mindestens eine steigende Rahmenelement zumindest teilweise von der Vorderwand des Lastenfahrradbehälters umgeben ist. Inbesondere ist es bevorzugt, dass die Vorderwand das mindestens eine steigende Rahmenelement zumindest seitlich abdeckt, um die Gefahr von Verletzungen zu verringern. Das mindestens eine steigende Rahmenelement ist vorzugsweise mit dem mindestens einen horizontalen Rahmenelement und dem Gabelelement verbunden.

Gemäß einer bevorzugten Weiterbildung weist der Lastenaufnahmebehälter einen in montiertem Zustand in Fahrtrichtung weisenden Ansatz auf. Dieser Ansatz ragt, zumindest teilweise, über ein Gabelelement. Zumindest ragt dieser Ansatz über einen oberen Bereich des Gabelelements. Der Ansatz des aus einem Kunststoffmaterial hergestellten ersten Aufnahmebehälters weist eine gewisse Elastizität und Verformbarkeit auf. Der Ansatz dient somit als Aufprallschutz, so dass bei einem Unfall die Gefahr von Verletzungen an dem Gabelelement, insbesondere dem oberen Bereich des Gabelelements, deutlich verringert ist. Ein derartiger Ansatz an einem Lastenaufnahmebehälter stellt eine unabhängige Erfindung dar. Diese ist insbesondere unabhängig davon, ob der Lastenaufnahmebehälter eine vertikale Teilung aufweist, aus mehreren Elementen hergestellt ist oder einstückig ausgebildet ist. Auch könnte der entsprechende Ansatz mit einem Lastenaufnahmebehälter verbunden sein. In einer bevorzugten Weiterbildung ist der Lastenaufnahmebehälter, wie vorstehend beschrieben, aus- bzw. weitergebildet.

Erfindungsgemäß besteht somit die Besonderheit des Lastenaufnahmebehälters darin, dass dieser insbesondere vollständig aus Kunststoff, insbesondere einem weichen Kunststoff wie Partikelschaum hergestellt werden kann und andererseits die erforderliche Festigkeit und Steifigkeit durch die Versteifungs- bzw. Verbindungselemente erzielt wird. Diese sind zumindest in den sicherheitsrelevanten Bereichen vom Kunststoffelement zumindest teilweise, insbesondere au-ßen abgedeckt, so dass die Gefahr der Verletzung verringert ist.

Nachfolgend wird die Erfindung anhand einer bevorzugten Ausführungsform unter Bezugnahme auf die anliegenden Zeichnungen näher erläutert.

Es zeigen:
- Fig. 1a: eine schematische Seitenansicht eines Lastenfahrrads mit einem erfindungsgemäß ausgebildeten Lastenaufnahmebehälter,
- Fig. 1b: eine schematische perspektivische Seitenansicht eines Lastenfahrrads ohne Lastenaufnahmebehälter,
- Fig. 2: eine perspektivische Seitenansicht einer ersten bevorzugten Ausführungsform des Lastenaufnahmebehälters,
- Fig. 3: eine Seitenansicht einer der beiden Hälften des in Fig. 1 dargestellten Lastenaufnahmebehälters,

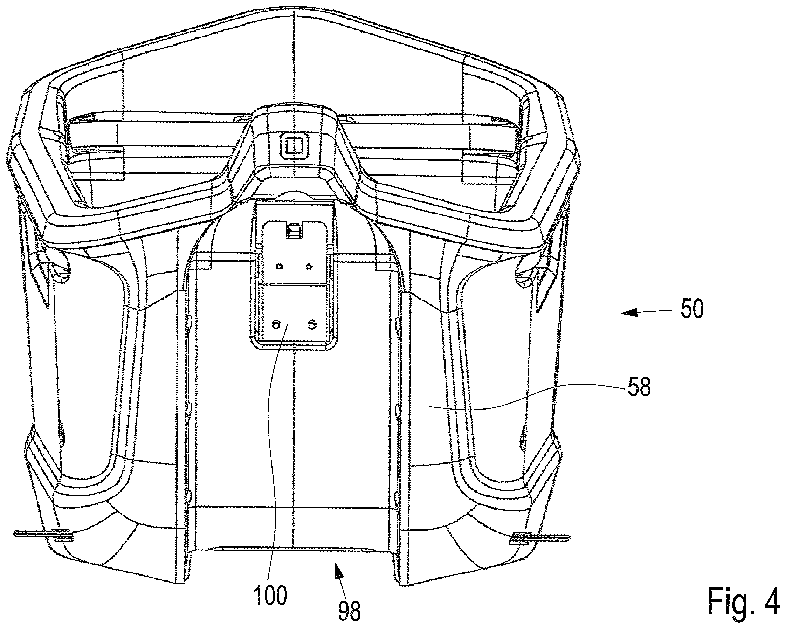

- Fig. 4: eine perspektivische Rückansicht des Lastenaufnahmebehälters, und
- Fig. 5: eine Draufsicht eines Lastenaufnahmebehälters.

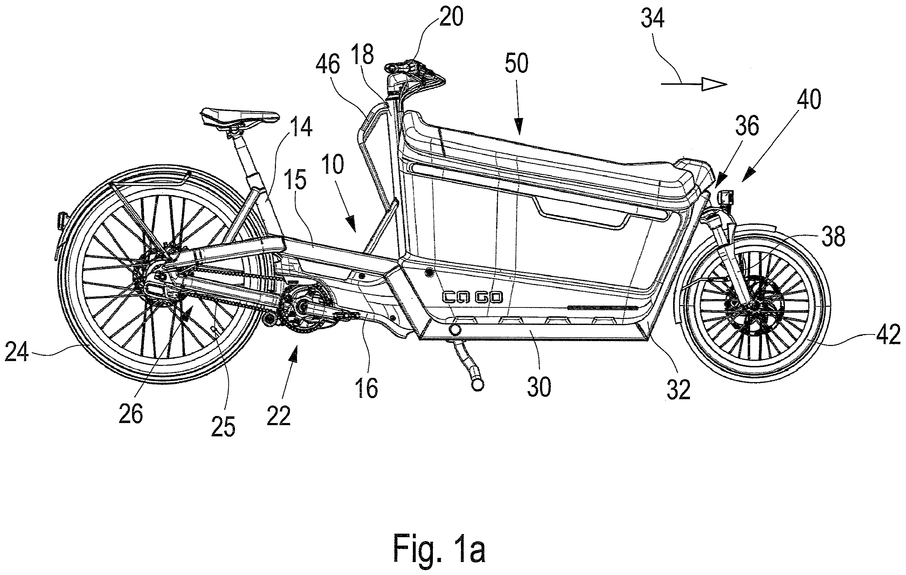

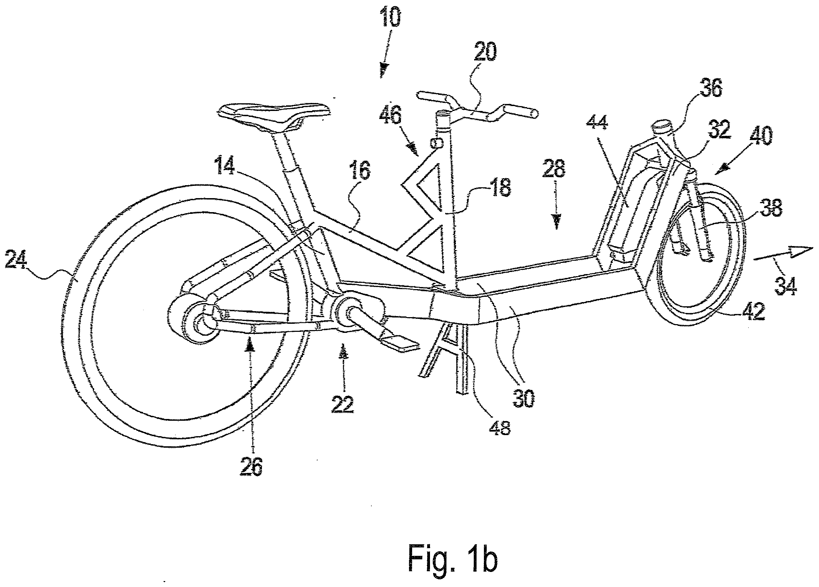

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 (Fig. 1b) auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkerrohr 18 ist ein Griffelement 46 verbunden. Im dargestellten Ausführungsbeispiel ist das Griffelement an einer Rückseite des Lenkerrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkerrohr 18 angeordnet sind.

Um das Lastenrad anzuheben oder beispielsweise auf einen Hauptständer 60 zu heben, kann der Nutzer insbesondere am oberen Teil 48 des Griffelements angreifen.

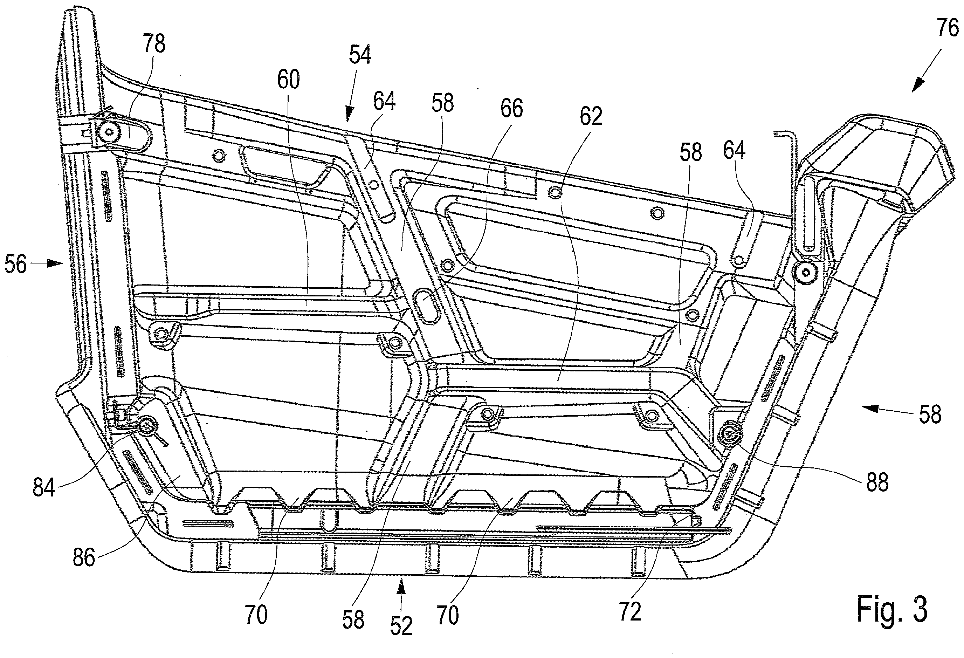

Ein Lastenfahrradbehälter 50 weist ein Bodenelement 52, zwei Seitenelemente 54, eine Rückwand 56 sowie eine Vorderwand 58 auf. In dem dargestellten besonders bevorzugten Ausführungsbeispiel ist der Lastenfahrradbehälter aus im Wesentlichen zwei Kunststoffteilen, wie in Fig. 3 dargestellt, ausgebildet. Die beiden Kunststoffteile sind zu einer vertikalen Mittelebene, die in montiertem Zustand der Fahrradmittelebene entspricht, spiegelbildlich ausgebildet. Jede der beiden Kunststoffteil-Hälften weist somit eine Seitenwand 54, eine halbe Rückwand 56, eine halbe Vorderwand 58 und eine halbes Bodenelement 52 auf.

Erfindungsgemäß ist die Entformungsrichtung senkrecht zur Seitenwand 54, d.h. senkrecht zur Zeichenebene der Fig. 3. Dies hat den wesentlichen Vorteil, dass es möglich ist, auf einfache Weise in Entformungsrichtung Versteifungsrippen 58 vorzusehen, wobei einzelne Versteifungsrippen 60,62 auch als Auflagen, beispielsweise Armauflagen, ausgebildet sein können. Die Rippen 58,60,62 erstrecken sich in Ausformrichtung, so dass keine Hinterschnitte entstehen. Ferner können beispielsweise in Rippen Ausnehmungen 64,66 vorgesehen sein, die nach innen bzw. in Ausformrichtung offen sind. Die schlitzförmigen Ausnehmungen 64 sind ferner an einer Oberseite 68 der Seitenwand 54 offen, so dass hierin beispielsweise Stangen eines Verdecks eingesteckt und justiert werden können. In der Ausnehmung 66 kann beispielsweise ein Flaschenhalter, eine Halterung für Transportgüter etc. angebracht werden.

In dem Bodenelement 52 sind im dargestellten Ausführungsbeispiel als Rillen ausgebildete Ausnehmungen 70 vorgesehen, die an einer Innenseite des Bodenelements 52 angeordnet sind und sich ebenfalls in Entformungsrichtung erstrecken. Hierdurch kann die Oberfläche des Bodenelements strukturiert werden und ebenfalls die Steifigkeit verbessert werden. Ferner ist im Bodenelement eine in Fig. 3 zur Hälfte sichtbare Öffnung 72 vorgesehen. Durch diese Öffnung ist es möglich, die in montiertem Zustand zwischen den beiden Rahmenelementen 30 des Fahrradrahmens 10 angeordnete Batterie beispielsweise zur Wartung oder zur Entnahme zugänglich zu machen. Die Öffnung 72 ist von einem Deckel 74 verschlossen.

Im vorderen oberen Endbereich der Vorderwand 58 ist ferner ein Ansatz 76 vorgesehen. Dieser verdeckt eine Oberseite des Gabelschafts. Der Ansatz 76 ragt in Fahrtrichtung über den oberen Bereich des Gabelelements und dient u.A. als Aufprallschutz.

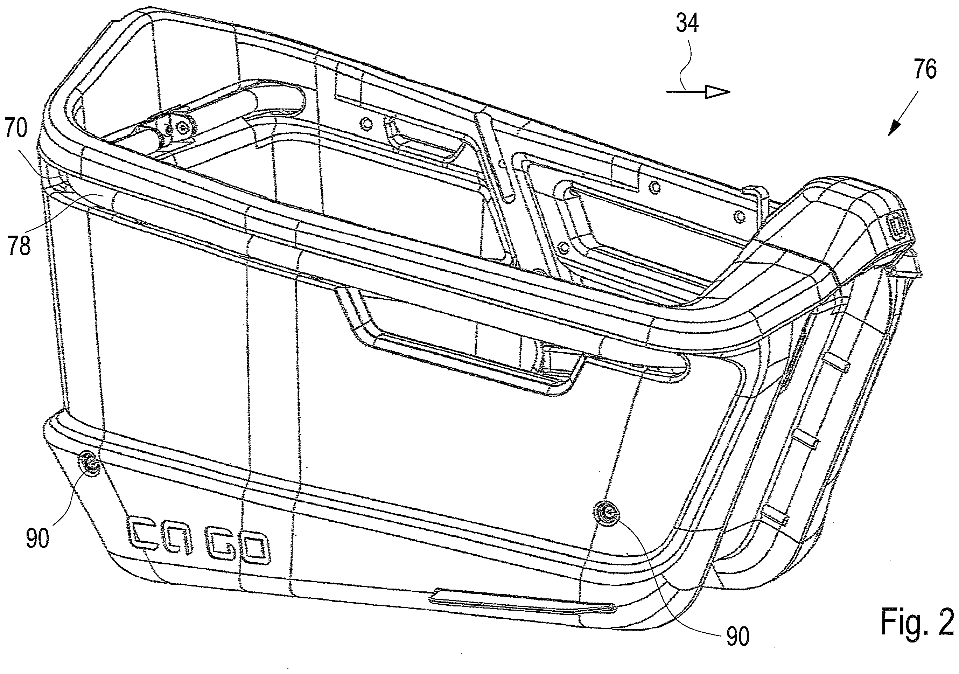

Die beiden in Fig. 3 dargestellten Hälften aus Kunststoff werden zu dem in Fig. 2 dargestellten Lastenfahrradbehälter zusammengesetzt. Zur Fixierung bzw. Verbindung der beiden Hälften ist in einem oberen Bereich ein aus zwei Bügelelementen 78 bestehender Verbindungsbügel vorgesehen. Die beiden Bügelelemente werden im Bereich der Trennebene mit entsprechenden Verbindungselementen verbunden. Die Trennebene ist die in Fig. 3 dargestellte Vorderseite der Hälfte der Rückwand 56 bzw. der Hälfte der Vorderwand 58 sowie der Hälfte des Bodenelements 52. Die beiden Bügelelemente 78 werden fest miteinander verbunden bzw. verspannt, so dass diese eine Klammer im oberen Bereich des Lastenfahrradbehälters ausbilden.

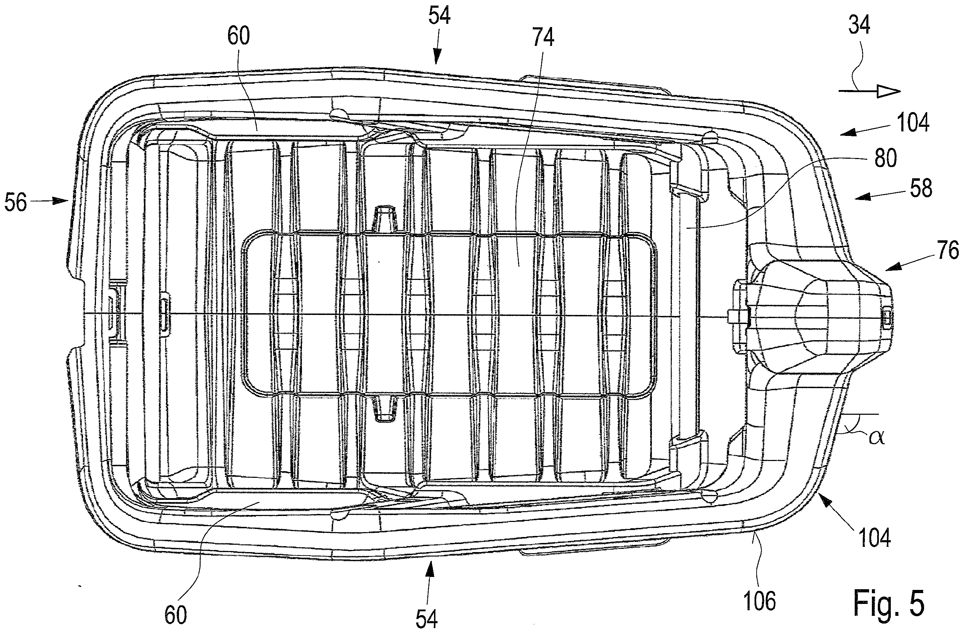

Zur Verbindung der beiden Hälften sind ferner zwei Verbindungsstreben 80,82 (Fig. 5) vorgesehen. Eine in Fahrtrichtung 34 hintere Verbindungsstrebe ist in einer Ausnehmung 84 (Fig. 3) angeordnet. Die Ausnehmung 84 ist in einem nach innen ragenden rippenförmigen Ansatz 86 vorgesehen. An der gegenüberliegenden Seite, d.h. in der weiteren Kunststoffteil-Hälfte, ist die Anordnung entsprechend. Die vordere Verbindungsstrebe 80 ist in einer Ausnehmung 88 (Fig. 3) angeordnet. Zum Verspannen der beiden Hälften des Lastenfahrradbehälters weisen die Verbindungsstreben 80,82 beispielsweise auf einer Seite einen als Kopf ausgebildeten Ansatz auf, wobei an der anderen Seite der Streben eine Mutter aufgeschraubt wird. Ebenso können beide Verbindungsstreben ein Innengewinde aufweisen, so dass die Fixierung von außen durch insbesondere als Schrauben ausgebildete Fixierelemente 90 (Fig. 2) erfolgen kann.

Die vorstehend anhand eines zweiteiligen Lastenfahrradbehälters beschriebenen Verbindungsbügel 78 können als insbesondere bügelförmiges Versteifungselement auch bei einem ggf. einteiligen Lastenfahrradbehälter zur erfindungsgemäßen Versteifung vorgesehen sein.

Ein Übergangsbereich 104 (Fig. 5) zwischen der Vorderwand 58 und den beiden Seitenwänden 54 ist abgerundet bzw. konvex ausgebildet. Insbesondere ist insofern eine Außenseite 106 im Übergangsbereich nach außen gekrümmt bzw. konvex ausgebildet. Der im Übergangsbereich herrschende Radius ist vorzugsweise größer als 5 cm, insbesondere größer als 10 cm. Hierdurch kann ein Aufprall, der üblicherweise entgegen der Fahrtrichtung 34 oder in einem spitzen Winkel zur Fahrtrichtung erfolgt, abgefangen werden. Des Weiteren ist es hierzu bevorzugt, dass die Vorderseite im Übergangsbereich oder in Richtung des Übergangsbereichs 104 geneigt ist. Die Neigung weist zu der Fahrtrichtung 34 bzw. zur Längsrichtung des Lastenaufnahmebehälters einen Winkel α auf, der größer als 90° ist. Bevorzugt ist es, dass ein Teil der Vorderseite 58, wie in Fig. 5 dargestellt, geneigt ist und sodann in einen gekrümmten Übergangsbereich 104 übergeht. Ggf. kann der Winkel α größer als in Fig. 5 dargestellt sein.

Das Versteifungselement 78 bzw. die Verbindungsbügel 78 sind insbesondere in dem Übergangsbereich 104 zwischen der Vorderwand 58 und den Seitenwänden 54 von Kunststoffmaterial umgeben, d.h. insbesondere vollständig innerhalb der Vorderwand 58 und/oder der Seitenwände 54 angeordnet. Dies ist beispielsweise in Fig. 2 gut sichtbar, bei der das Versteifungselement 78 erst unmittelbar nach bzw. am entgegen der Fahrtrichtung weisenden Ende des Übergangsbereichs 104 sichtbar ist. Auch in diesem Bereich ist das Versteifungselement 78 insbesondere über die gesamte Länge der Seitenwand 54 in der Nut oder Ausnehmung 70 (Fig. 2) angeordnet. Die Nut 70 weist hierbei eine Tiefe auf, so dass das Versteifungselement 78 gegenüber der Außenseite 106 der Seitenwand 54 nicht vorsteht.

An der Vorderwand 58 ist eine entgegen der Fahrtrichtung in den Behälter 50 hineinragende Vertiefung 98 vorgesehen. In diese Vertiefung 98 ist zumindest ein Teil der Gabelelemente 32 der Tragelemente 28 angeordnet und über ein plattenförmiges Verbindungselement 100 fixiert. Das insbesondere als Metallplatte o.dgl. ausgebildete Verbindungselement 100 ist mit dem Verbindungsbügel 78 verbunden, so dass auftretende Kräfte unmittelbar zwischen dem Verbindungsbügel 78 und dem Fahrradrahmen übertragen werden. Die Krafteinleitung in dem als Kunststoff bestehenden Behälter 50 ist somit stark reduziert.

Durch Vorsehen der Vertiefung 58 sind somit in montiertem Zustand die steigenden Rahmenelemente 32 (Fig. 1a und 1b) zumindest teilweise durch den Lastenfahrradbehälter verdeckt. Dies führt dazu, dass diese Bereiche, die üblicherweise aus Metall sind, geschützt sind. Ggf. kann die Vorderwand des Lastenfahrradbehälters derart ausgebildet sein, dass die Rahmenteile 32 vollständig umgeben sind. Dies ist insbesondere bei einer zweiteiligen Ausbildung des Lastenfahrradbehälters mit mittiger Trennebene auf einfache Weise möglich, da sodann der Lastenfahrradbehälter zur Montage von beiden Seiten über die Rahmenelemente 32 gesteckt werden kann. Die Verbindung mit dem plattenförmigen Verbindungselement 100 könnte bei dieser Ausführungsform sodann ggf. von innen erfolgen.

Des Weiteren weist der Lastenfahrradbehälter 50 eine Breite quer zur Fahrtrichtung 34 auf, die breiter ist als die Breite der beiden Rahmenelemente 30 (Fig. 1a und 1b). Somit existiert auch bei einem Aufprall ein Schutz gegenüber diesen Rahmenelementen.

## Patentansprüche

1. Lastenfahrradbehälter mit
einem Bodenelement (22),zwei einander gegenüberliegenden Seitenwänden (54),einer Rückwand (56),einer Vorderwand (58) undmindestens einem Versteifungselement (78),wobei
das Versteifungselement (78) zumindest teilweise innerhalb einer der Seitenwände (54) und/oder der Rückwand (56) und/oder der Vorderwand (58) angeordnet ist,
wobei
die Vorderwand (58) im Übergangsbereich (104) einen Winkel α zur Längsrichtung bzw. Fahrtrichtung (34) von mehr als 90°, inbesondere mehr als 110° und besonders bevozugt mehr als 130° aufweist, **dadurch gekennzeichnet,**
**dass** das Versteifungselement (78) im Übergangsbereich (104) zwischen der Vorderwand (58) und einer der Seitenwände (54) innerhalb der Seitenwand (54) und der Vorderwand (58) angeordnet ist, wobei in dem Übergangsbereich (104) das Versteifungselement (78) zumindest an einer Außenseite (104) vom Material einer der Seitenwände (54) und der Vorderwand (58) abgedeckt ist.

2. Lastenfahrradbehälter nach Anspruch 1, **dadurch gekennzeichnet, dass** das Versteifungselement (78) an Gefahrenstellen (104) bei einem Aufprall innerhalb einer der Seitenwände (54) und/oder der Rückwand (56) und/oder der Vorderwand (58) angeordnet ist.

3. Lastenfahrradbehälter Anspruch 1 oder 2, **dadurch gekennzeichnet, dass** das Versteifungselement (78) in Bereichen, in denen es innerhalb einer der Seitenwände (54) und/oder der Rückwand (56) und/oder der Vorderwand (58) angeordnet ist, zumindest an einer Außenseite (106) vom Material einer der Seitenwände (54) und/oder der Rückwand (56) und/oder der Vorderwand (58) abgedeckt ist.

4. Lastenfahrradbehälter nach einem der Ansprüche 1 bis 3, **dadurch gekennzeichnet, dass** das Versteifungselement (78) in Bereichen, in denen es innerhalb einer der Seitenwände (54) und/oder der Rückwand (56) und/oder der Vorderwand (58) angeordnet ist, zumindest vollständig in einer Nut bzw. Ausnehmung (70) angeordnet ist.

5. Lastenfahrradbehälter nach einem der Ansprüche 1 bis 4, **dadurch gekennzeichnet, dass** die beiden Seitenwände (54) und/oder die Rückwand (56) und/oder die Vorderwand (58) und/oder das Bodenelement (52) zumindest teilweise, insbesondere vollständig aus Kunststoff hergestellt ist.

6. Lastenfahrradbehälter nach Anspruch 5, **dadurch gekennzeichnet, dass** der Kunststoff einen Partikelschaum, insbesondere EPP (expandierbares Polypropylen) aufweist, insbesondere aus diesem Material hergestellt ist.

7. Lastenfahrradbehälter nach einem der Ansprüche 1 bis 6, **dadurch gekennzeichnet, dass** das Versteifungselement (78) als insbesondere umlaufender Verbindungsbügel ausgebildet ist.

8. Lastenfahrradbehälter nach einem der Ansprüche 1 bis 7, **dadurch gekennzeichnet, dass** die Vorderwand (58) insbesondere im Übergangsbereich (104) zu den Seitenwänden (54) eine konvexe Außenseite (106) aufweist.

9. Lastenfahrradbehälter nach Anspruch 8, **dadurch gekennzeichnet, dass** die Außenseite (106) im Übergangsbereich (104) einen Krümmungsradius von mindestens 5 cm und besonders bevorzugt mindestens 10 cm aufweist.

10. Lastenfahrradbehälter nach einem der Ansprüche 1 bis 9, **dadurch gekennzeichnet, dass** der Lastenfahrradbehälter mehrteilig, insbesondere zweiteilig ausgebildet ist.

11. Lastenfahrradbehälter nach einem der Ansprüche 1 bis 10, **dadurch gekennzeichnet, dass** die Vorderwand (58) einen Ansatz (76) aufweist, der in montiertem Zustand das Gabelelement (40) zumindest teilweise überdeckt.

12. Lastenfahrrad-Rahmen, mit
einem Hinterbau (26) zur Aufnahme eines Hinterrads (24),
einem Gabelelement (4) zur Aufnahme eines Vorderrads (42),
einem Tragelement (28) zur Aufnahme eines Lastenfahrradbehälters nach einem der Ansprüche 1 bis 11 zwischen einem Lenkerrohr (18) und dem Gabelelement (40) und einem Lastenfahrradbehälter nach einem der Ansprüche 1 bis 11.

13. Lastenfahrrad-Rahmen nach Anspruch 12, **dadurch gekennzeichnet, dass** das Tragelement (28) insbesondere zwei im Wesentlichen horizontal verlaufende Rahmenelemente (30) aufweist und der Lastenfahrradbehälter seitlich über diese übersteht.

14. Lastenfahrrad-Rahmen nach Anspruch 12 oder 13, **dadurch gekennzeichnet, dass** das Tragelement (28) insbesondere zwei in Fahrtrichtung (34) steigende Rahmenelemente (32) aufweist, die mit dem Gabelelement (40) verbunden sind, wobei die Vorderwand (58) des Lastenfahrradbehälters das mindestens eine steigende Rahmenelement (32) zumindest teilweise, insbesondere vollständig umgibt.

## Claims

1. Load-carrying cycle container comprising
a bottom element (22), two side walls (54) opposite each other, a rear wall (56), a front wall (58) and at least one reinforcement element (78), wherein the reinforcement element (78) is arranged at least partially in one of the side walls (54) and/or the rear wall (56) and/or the front wall (58),
wherein, in the transition region (104), the front wall (58) comprises an angle α relative to the longitudinal direction or the traveling direction (34) larger than 90°, in particular larger than 110° and particularly preferred larger than 130°,
**characterized in that**
the reinforcement element (78) is arranged in the transition region (104) between the front wall (58) and one of the side walls (54) in the side wall (54) and the front wall (58), wherein in the transition region (104), the reinforcement element (78) is covered at least on the outer side by the material of one of the side walls (54) and the front wall (58).

2. Load-carrying cycle container according to claim 1, **characterized in that** the reinforcement element (78) is arranged in one of the side walls (54) and/or the rear wall (56) and/or the front wall (58) in zones (104) of danger in case of an impact.

3. Load-carrying cycle container according to claim 1 or 2, **characterized in that** in regions, in which the reinforcement element (78) is arranged in one of the side walls (54) and/or the rear wall (56) and/or the front wall (58), the reinforcement element is covered at least on one outer side (106) by the material of one of the side walls (54) and/or the rear wall (56) and/or front wall (58).

4. Load-carrying cycle container according to one of claims 1 to 3, **characterized in that** in regions in which the reinforcement element (78) is arranged in one of the side walls (54) and/or the rear wall (56) and/or the rear wall (58), the reinforcement element is arranged at least completely in a groove or recess (70).

5. Load-carrying cycle container according to one of claims 1 to 4, **characterized in that** the two side walls (54) and/or the rear wall (56) and/or the front wall (58) and/or the bottom element (52) is made at least partially, in particular entirely of plastic material.

6. Load-carrying cycle container according to claim 5, **characterized in that** the plastic material comprises a particle foam, in particular EPP (expandable polypropylene), the plastic material in particular being made of such material.

7. Load-carrying cycle container according to one of claims 1 to 6, **characterized in that** the reinforcement element (78) is formed as an in particular circumferential connecting bracket.

8. Load-carrying cycle container according to one of claims 1 to 7, **characterized in that** the front wall (58) has a convex outer side (106) in particular in the transition region (104) to the side walls (54).

9. Load-carrying cycle container according to claim 8, **characterized in that** in the transition region (104), the outer side (106) has a radius of curvature of at least 5 cm and particularly preferred at least 10 cm.

10. Load-carrying cycle container according to one of claims 1 to 9, **characterized in that** the load-carrying cycle container is of multi-part, in particular bipartite design.

11. Load-carrying cycle container according to one of claims 1 to 10, **characterized in that** the front wall (58) has a tab (76) which in the mounted state covers the fork element (40) at least in part.

12. Load-carrying cycle frame comprising
a rear frame structure (26) for receiving a rear wheel (24),
a fork element (4) for receiving a front wheel (42),
a support element (28) for receiving a load-carrying cycle container according to one of claims 1 to 11 between a steer tube (18) and the fork element (40) and a load-carrying cycle container according to one of claims 1 to 11.

13. Load-carrying cycle frame according to claim 12, **characterized in that** the support element (28) comprises in particular two substantially horizontal frame elements (30) and the load-carrying cycle container extends laterally beyond the same.

14. Load-carrying cycle frame according t claim 12 or 13, **characterized in that** the support element (28) comprises in particular two frame elements (32) rising in the direction of travel (34), which are connected to the fork element (40), wherein the front wall (58) of the load-carrying cycle container encloses the at least one rising frame element (32) at least partially, in particular completely.

## Revendications

1. Conteneur de vélo cargo, comprenant
un élément de fond (22), deux parois latérales (54) opposées, une paroi arrière (56), une paroi avant (58) et au moins un élément de renforcement (78), dans lequel
l'élément de renforcement (78) est agencé au moins partiellement à l'intérieur d'une des parois latérales (54) et/ou de la paroi arrière (56) et/ou de la paroi avant (58),
dans lequel, dans une région de transition (104), la paroi avant (58) présente par rapport à la direction longitudinale ou au sens de déplacement (34) un angle a qui est supérieur à 90°, en particulier supérieur à 110°, et de manière particulièrement préférée supérieur à 130°,
**caractérisé en ce que**
l'élément de renforcement (78) est agencé à l'intérieur de la paroi latérale (54) et de la paroi avant (58), dans la région de transition (104) entre la paroi avant (58) et une des parois latérales (54), l'élément de renforcement (78) étant recouvert dans la région de transition (104) par du matériau d'une des parois latérales (54) et de la paroi avant (58) au moins au niveau d'un côté extérieur (104).

2. Conteneur de vélo cargo selon la revendication 1, **caractérisé en ce que** l'élément de renforcement (78) est agencé à l'intérieur d'une des parois latérales (54) et/ou de la paroi arrière (56) et/ou de la paroi avant (58), au niveau d'emplacements dangereux (104) en cas de choc.

3. Conteneur de vélo cargo selon la revendication 1 ou 2, **caractérisé en ce que** l'élément de renforcement (78), dans des régions au sein desquelles il est agencé à l'intérieur d'une des parois latérales (54) et/ou de la paroi arrière (56) et/ou de la paroi avant (58), est recouvert par du matériau d'une des parois latérales (54) et/ou de la paroi arrière (56) et/ou de la paroi avant (58) au moins au niveau d'un côté extérieur (106).

4. Conteneur de vélo cargo selon l'une des revendications 1 à 3, **caractérisé en ce que** l'élément de renforcement (78) est agencé au moins entièrement dans une rainure ou un évidement (70) dans des régions au sein desquelles il est agencé à l'intérieur d'une des parois latérales (54) et/ou de la paroi arrière (56) et/ou de la paroi avant (58).

5. Conteneur de vélo cargo selon l'une des revendications 1 à 4, **caractérisé en ce que** les deux parois latérales (54) et/ou la paroi arrière (56) et/ou la paroi avant (58) et/ou l'élément de fond (52) sont fabriqués au moins partiellement, en particulier entièrement, en plastique.

6. Conteneur de vélo cargo selon la revendication 5, **caractérisé en ce que** le plastique présente des particules expansées, en particulier du PPE (polypropylène expansible), en particulier est fabriqué à partir dudit matériau.

7. Conteneur de vélo cargo selon l'une des revendications 1 à 6, **caractérisé en ce que** l'élément de renforcement (78) est réalisé sous la forme d'un étrier de liaison en particulier circonférentiel.

8. Conteneur de vélo cargo selon l'une des revendications 1 à 7, **caractérisé en ce que** la paroi avant (58) présente un côté extérieur (106) convexe, en particulier dans la région de transition (104) menant aux parois latérales (54).

9. Conteneur de vélo cargo selon la revendication 8, **caractérisé en ce que** le côté extérieur (106) présente dans la région de transition (104) un rayon de courbure d'au moins 5 cm, et de manière particulièrement préférée d'au moins 10 cm.

10. Conteneur de vélo cargo selon l'une des revendications 1 à 9, **caractérisé en ce que** le conteneur de vélo cargo est réalisé en plusieurs parties, en particulier en deux parties.

11. Conteneur de vélo cargo selon l'une des revendications 1 à 10, **caractérisé en ce que** la paroi avant (58) présente un épaulement (76) qui, à l'état assemblé, recouvre au moins partiellement l'élément formant fourche (40).

12. Cadre de vélo cargo, comprenant
une structure arrière (26) permettant d'accueillir une roue arrière (24),
un élément formant fourche (4) permettant d'accueillir une roue avant (42),
un élément porteur (28) permettant d'accueillir un conteneur de vélo cargo selon l'une des revendications 1 à 11 entre un tube de direction (18) et l'élément formant fourche (4), et un conteneur de vélo cargo selon l'une quelconque des revendications 1 à 11.

13. Cadre de vélo cargo selon la revendication 12, **caractérisé en ce que** l'élément porteur (28) présente en particulier deux éléments de cadre (30) s'étendant de manière essentiellement horizontale et le conteneur de vélo cargo dépasse latéralement au-dessus desdits deux éléments de cadre.

14. Cadre de vélo cargo selon la revendication 12 ou 13, **caractérisé en ce que** l'élément porteur (28) présente en particulier deux éléments de cadre (32) qui remontent dans le sens de déplacement (34) et qui sont reliés à l'élément formant fourche (40), la paroi avant (58) du conteneur de vélo cargo entourant au moins partiellement, en particulier entièrement, l'élément de cadre remontant (32), au moins au nombre de un.
